# EUROPEAN PATENT APPLICATION

(11) **EP 2 387 239 A2**
(43) Date of publication of application: **16.11.2011**
(21) Application number: 11161865.8
(22) Date of filing: 11.04.2011
(51) Int. Cl.: H04N 7/18

(54) **Control device, camera system and program**

(30) Priority: 10.05.2010 JP 2010108564
(71) Applicant: Sony Corporation, Tokyo 108-0075 (JP)
(72) Inventor: Sakaki, Kazunori, TOKYO Tokyo 108-0075 (JP)
(74) Representative: Körber, Martin Hans

(57) **Abstract**

There is provided a camera terminal device including a receiving unit that receives request information of control to control a region specified in a whole image captured by a camera, a control unit that assigns the control based on the request information when the control is not assigned to the region based on the request information, and an image processing unit that acquires the region specified from the whole image based on control information to control the region when the control is assigned based on the request information. A plurality of the regions is set, and the control unit assigns control to one of the regions when the control is not assigned to the one region, regardless whether or not control is assigned to other regions.

## Description

### BACKGROUND OF THE INVENTION

### Field of the Invention

The present invention relates to a control device, a camera system, and a program.

### Description of the Related Art

A camera control system in which, when a plurality of users can operate a camera, control over the camera is assigned to a user who wants to operate for a fixed period has been known to prevent a collision of operations from the plurality of users. This camera control system is described, for example, in Japanese Patent Application Laid-Open No. 2004-194217. Japanese Patent Application Laid-Open No. 2004-194217 described that control is exercised so that an operation unit is displayed when the camera control is held and no operation unit is displayed when the camera control is not held. Moreover, as described in Japanese Patent Application Laid-Open No. 2004-194217, a camera control system in which a list of images from a plurality of cameras is displayed and the display state is changed depending on whether a camera can be operated or not is known. Japanese Patent Application Laid-Open No. 9-214811 describes that when a camera is not operable, control is exercised so that the operation unit corresponding thereto is displayed in gray. Japanese Patent No. 3548352 describes a system that assigns control in a remote camera control system.

### SUMMARY OF THE INVENTION

However, according to the above-described technologies, the imaging direction of a camera is fixed in all the above systems and no system assumes operations such as panning, tilting, and zooming by digitally cutting out a desired region from a whole image. Thus, there is an issue that it is necessary to mechanically exercise control such as panning, tilting, and zooming on the side of a camera terminal device, making the system more complicated.

In light of the foregoing, it is desirable to provide a novel and improved control device capable of properly giving control to a client device in a system in which operations such as panning, tilting, and zooming are digitally performed, a camera system, and a program.

Various aspects and features of the invention are defined in the appended claims.
According to an embodiment of the present invention, there is provided a control device, including a receiving unit that receives request information of control to control a region specified in a whole image captured by a camera, a control unit that assigns the control based on the request information when the control is not assigned to the region based on the request information, and an image processing unit that acquires the region specified from the whole image based on control information to control the region when the control is assigned based on the request information. A plurality of the regions is set, and the control unit assigns control to one of the regions when the control is not assigned to the one region, regardless whether or not control is assigned to other regions.

The control device may further include a timer to count an elapsed time after the control being assigned. When a predetermined time passes after the control being assigned, the control unit may remove the control.

The control device may further include a transmitting unit that transmits a time at which control is assigned or an elapsed time after the control being assigned to a transmission source of the request information if the control is already assigned to the region.

According to another embodiment of the present invention, there is provided a camera system in which a camera terminal device that captures an image and a client terminal device that controls the camera terminal device are connected via a network. The camera terminal device may include a receiving unit that receives request information of control to control a region specified in a whole image captured by a camera, a control unit that assigns the control based on the request information when the control is not assigned to the region based on the request information, and an image processing unit that acquires the region specified from the whole image based on control information to control the region when the control is assigned based on the request information. A plurality of the regions may be set, and the control unit may assign control to one of regions when the control is not assigned to the one region, regardless whether or not control is assigned to other regions.

The camera system may further include a timer to count an elapsed time after the control being assigned. When a predetermined time passes after the control being assigned, the control unit may remove the control

The camera system may further include a transmitting unit that transmits a time at which control is assigned or an elapsed time after the control being assigned to a transmission source of the request information if the control is already assigned to the region.

According to another embodiment of the present invention, there is provided a program causing a computer to function as means for receiving request information of control to control a plurality of regions specified in a whole image captured by a camera, means for assigning control based on the request information when the control is not assigned to the region based on the request information, and for assigning the control to one of the regions when the control is not assigned to the one region regardless whether or not control is assigned to other regions, and means for acquiring the region specified from the whole image based on control information to control the region when the control is assigned based on the request information.

According to the embodiments of the present invention described above, control can properly be assigned to a client device in a system in which operations such as panning, tilting, and zooming are digitally performed.

### BRIEF DESCRIPTION OF THE DRAWINGS

FIG. 1 is a schematic diagram showing an overall configuration of an imaging system according to an embodiment of the present invention;
FIG. 2 is a schematic diagram showing processing performed in the imaging system; and
FIG. 3 is a schematic diagram showing an appearance of a plurality of client terminals connected to a network.

### DETAILED DESCRIPTION OF THE EMBODIMENT

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Note that the description will be made in the following order.
(1) Configuration example of imaging system
(2) Processing in first control mode
(3) Processing in second control mode
(4) Processing about assignment of control

### (1) Configuration example of imaging system

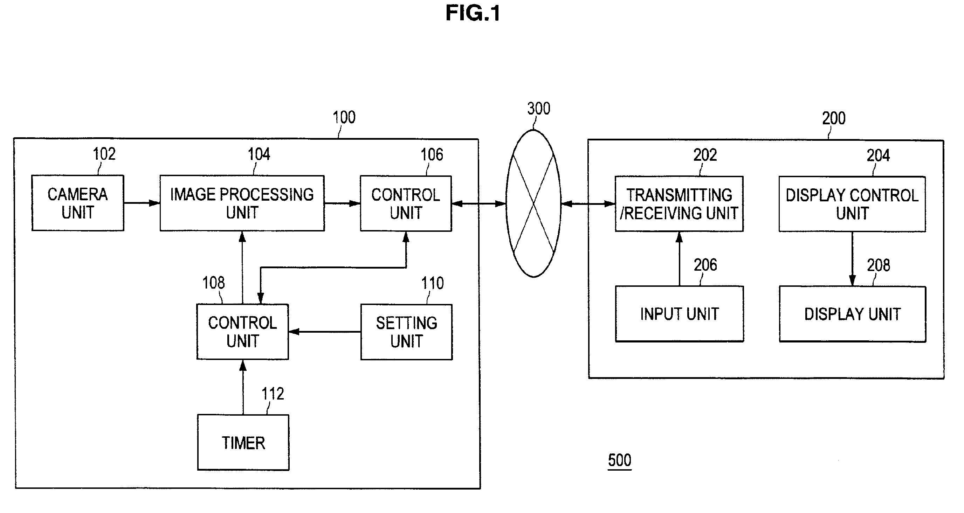

FIG. 1 is a schematic diagram showing an overall configuration of an imaging system 500 according to an embodiment of the present invention. The imaging system 500 includes a camera terminal device (IP camera) 100 and a client terminal 200 and the camera terminal device 100 and the client terminal 200 are connected via a network 300 such as the Internet.

The camera terminal device 100 is, for example, a monitoring camera that is placed indoors or outdoors and includes a camera unit 102 having a lens optical system that forms an object image and an image sensor that makes a photoelectric conversion of the formed object image. The camera terminal device 100 also includes an image processing unit 104, a transmitting/receiving unit 106, a control unit 108, a setting unit 110, and timer 112.

The client terminal 200 is a device, for example, a personal computer (PC). The client terminal 200 includes a transmitting/receiving unit 202, a display control unit 204, an input unit 206, and a display unit 208. Each functional block of the camera terminal device 100 and the client terminal 200 is configured by hardware (circuit) or a central processor such as a CPU and software (program) to cause the hardware to function. In this case, the program can be recorded in a recording medium such as a memory included in the camera terminal device 100 or the client terminal 200 or an external memory inserted from outside.

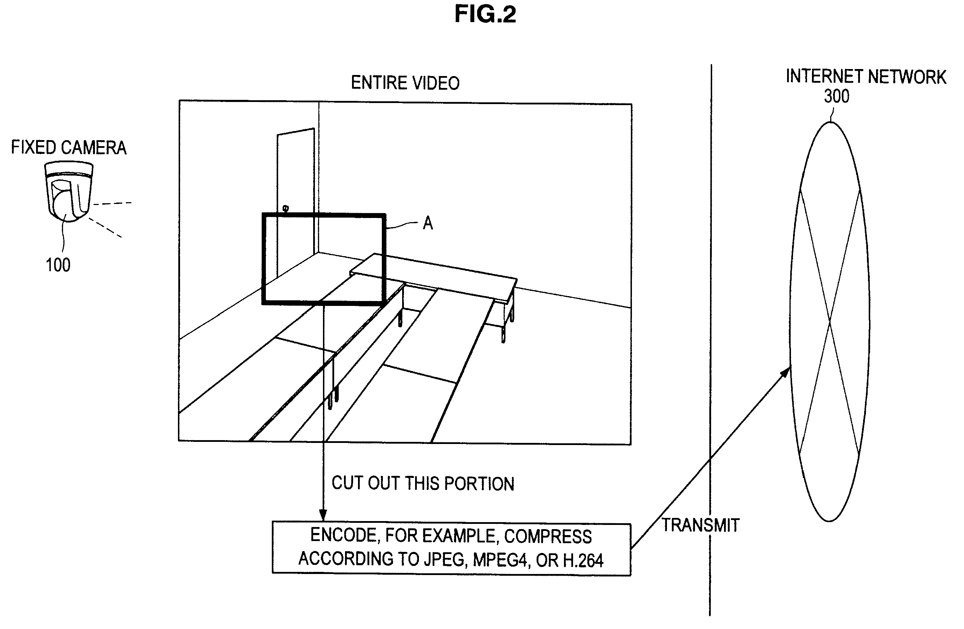

FIG. 2 is a schematic diagram showing processing performed in the imaging system 500. It is assumed here that the camera terminal device 100 is installed in an indoor conference room. As shown in FIG. 2, the camera unit 102 of the camera terminal device 100 images a relatively wide range in the conference room as a whole image.

The whole image is transmitted to the client terminal 200 as data of a still image. The user can specify a desired range from the whole image by using the client terminal 200. If, for example, a region A shown in FIG. 2 is specified by the client terminal 200, the camera terminal device 100 encodes data of a live image of the region A and transmits the encoded data to the client terminal 200.

More specifically, the whole image (not live images) of a still image transmitted from the camera terminal device 100 is displayed in the display unit 208 of the client terminal 200 by processing of the display control unit 204 in advance. If the user specifies the desired region A in the whole image by operating the input unit 206 of the client terminal 200, the transmitting/receiving unit 202 of the client terminal 200 transmits information about the region A to the camera terminal device 100.

When the transmitting/receiving unit 106 of the camera terminal device 100 receives information (control information) about the region A via the network 300, the transmitting/receiving unit 106 transmits the information to the control unit 108. The control unit 108 issues an instruction to the image processing unit 104 to cut out a portion of the region A from a whole image (live image) transmitted from the camera unit 102 and to perform encode processing thereon. The transmitting/receiving unit 106 receives a live image of the region A on which encode processing has been performed from the image processing unit 104 and transmits the live image to the client terminal 200 via the network 300.

When the transmitting/receiving unit 202 of the client terminal 200 receives a live image of the region A from the camera terminal device 100, the transmitting/receiving unit 202 transmits data thereof to the display control unit 204. The display control unit 204 decodes the information about the region A and performs processing to display the information in the display unit 208.

Thus, by specifying a desired region from a whole image by operating the client terminal 200, the user can digitally perform operations equivalent to those of mechanical panning, tilting, or zooming and can acquire, as a result, a video of the desired region.

Particularly in recent years, with an increase in capacity of the network 300, images of higher quality with more pixels can be transmitted, but if all data of whole images should be transmitted as live images, the amount of data thereof will be huge. By transmitting only necessary data by specifying a region on the side of the user like in the present embodiment, images of higher quality of the desired region can be viewed.

In a system like one described above, if a plurality of the client terminals 200 is connected to one unit of the camera terminal device 100, a case when these client terminals 200 specify regions in a whole image simultaneously can be considered.

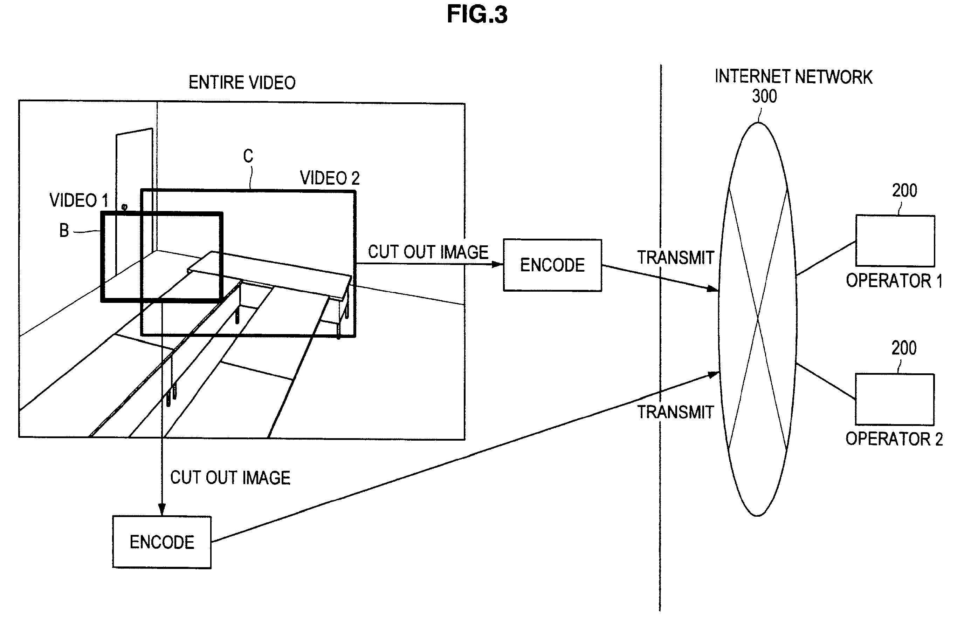

FIG. 3 is a schematic diagram showing an appearance of the plurality of the client terminals 200 connected to the network 300. It is assumed in FIG. 3 that up to two videos are specified as videos that can be operated by the plurality of the client terminals 200. In FIG. 3, the user can acquire live images of desired regions by separately specifying a video 1 (region B) and a video 2 (region C). In such a case, if the plurality of the client terminals 200 attempts to control the video 1 or the video 2 simultaneously, a situation in which the control thereof is competed against will arise.

If, for example, the two client terminals 200 attempt to control the region of the video 1 by simultaneously specifying the video 1, the control over the video 1 will be competed against and thus, it becomes necessary to assign control to one of the client terminals 200.

In such a case, the control to operate the video 1 is assigned to one of the client terminals 200 in the present embodiment and only the client terminals 200 to which the control is assigned can acquire a desired video by controlling the region of the video 1.

In the present embodiment, control is assigned to each of the client terminals 200 by using one of two control modes. Each mode will be described below.

### (2) Processing in first control mode

Processing in first control mode is applied when, for example, settings of codec, resolution, or frame rate are the same between the video 1 and the video 2 and each of the client terminals 200 can receive both the video 1 and the video 2.

In processing in first control mode, as shown in FIG. 3, when two videos of the video 1 and the video 2 can be operated and control over one of the videos is vacant, the vacant control of video is assigned to the client terminal 200 that makes an entry next to operate a video.

If, for example, controls of both the video 1 and the video 2 are vacant, the client terminal 200 (denoted as an operator 1) that first makes an entry can obtain the control over the video 1 or the video 2. It is assumed here that the operator 1 obtains the control over the video 1 to operate the video 1. While the operator 1 holds the control over the video 1, the operator 1 can freely operate the range of the video 1 to acquire a live image of a desired region.

Next, the client terminal 200 (denoted as an operator 2) that makes an entry while the operator 1 holds the control over the video 1 obtains the control over the video 2 because the control over the video 2 is vacant. Thus, while the operator 2 holds the control over the video 2, the operator 2 can freely operate the range of the video 2 to acquire a live image of a desired region.

Next, the client terminal 200 (denoted as an operator 3) that makes an entry while the operator 1 holds the control over the video 1 and the operator 2 holds the control over the video 2 may not obtain control because the controls over the video 1 and the video 2 are held by the operator 1 and the operator 2, respectively. Thus, the operator 3 waits until the control over the video 1 or the video 2 becomes vacant. Further, if an operator 4 makes an entry thereafter, the client terminal 200 will obtain control when the control becomes vacant in order of entry time.

The time in which control is held, for example, can be preset. The timer 112 of the camera terminal device 100 counts the time in which each operator holds control and, when a predetermined time passes, removes the control of the operator. If, as an example, the time in which an operator holds control is 15 min, when 15 min pass after the operator 1 obtains the control over the video 1 in the above example, the control of the operator 1 over the video 1 is removed. Accordingly, the operator 3 on standby obtains the control over the video 1 and can operate the video 1. Further, when 15 min pass after the operator 2 obtains the control over the video 2, the control of the operator 2 over the video 2 is removed. Accordingly, the operator 4 on standby obtains the control over the video 2 and can operate the video 2.

The first control mode described above is suitably used when settings of codec, resolution, or frame rate are the same between the video 1 and the video 2, but is not limited to such a case.

### (3) Processing in second control mode

Next, processing in second control mode will be described. Processing in second control mode is applied when settings of codec, resolution, or frame rate are different between the video 1 and the video 2 and each of the client terminals 200 can receive only one of the video 1 and the video 2.

First, if the control over the video 1 is vacant, the client terminal 200 (denoted as an operator 1) capable of receiving the video 1 obtains the control over the video 1 and can freely operate the range of the video 1.

Next, the other client terminal 200 (denoted as an operator 2) capable of receiving the video 1 may not operate the video 1 while the operator 1 holds the control over the video 1. This client terminal 200 may not receive the video 2. Thus, the operator 2 waits until the control of the operator 1 is removed.

On the other hand, the other client terminal 200 (denoted as an operator 3) capable of receiving the video 2 may not receive the video 1. Thus, even while the operator 1 holds the control over the video 1, if the control over the video 2 is vacant, this client terminal 200 can obtain the control over the video 2 and freely operate the range of the video 2.

The other client terminal 200 (denoted as an operator 4) capable of receiving the video 2 may not operate the video 2 while the operator 3 holds the control over the video 2. This client terminal 200 may not receive the video 1 and thus, the operator 4 waits until the control of the operator 3 is removed.

Like the first control mode, the time in which control is held can be preset. The timer 112 of the camera terminal device 100 counts the time in which each operator holds control and, when a predetermined time passes, removes the control of the operator. When 15 min pass after the operator 1 obtains the control over the video 1 in the above example, the control of the operator 1 over the video 1 is removed. Accordingly, the operator 2 on standby obtains the control over the video 1 and can operate the video 1. Further, when 15 min pass after the operator 3 obtains the control over the video 2, the control of the operator 3 over the video 2 is removed. Accordingly, the operator 4 on standby obtains the control over the video 2 and can operate the video 2.

The second control mode described above is suitably used when settings of codec, resolution, or frame rate are different between the video 1 and the video 2, but is not limited to such a case.

### (4) Processing about assignment of control

In order to obtain control, the user performs an operation to select the video 1 or the video 2 from the client terminal 200. A case when any of the client terminals 200 obtains the control over the video 1 will be described. This operation is performed by specifying an outer frame of the video 1 displayed in the display unit 208 from the input unit 206, for example, a mouse, keyboard or the like, but is not limited to this. After receiving this operation, the transmitting/receiving unit 202 transmits information (control request information) indicating that the client terminal 200 is attempting to obtain the control over the video 1 to the camera terminal device 100. When the client terminal 200 is attempting to obtain the control over the video 1, information (control request information) indicating that an attempt is being made to obtain the control over the video 2 is transmitted to the camera terminal device 100.

After control request information being transmitted to the camera terminal device 100 via the network 300 and received by the transmitting/receiving unit 106, the control request information is transmitted to the control unit 108. If no control is assigned to the video 1 or the video 2 over which the control is requested, the control unit 108 assigns the control to the client terminal 200 that has transmitted control request information and stores the IP address thereof. Accordingly, when information specifying a region of the video 1 is received from the client terminal 200 to which the control has been assigned, the control unit 108 issues an instruction to cut out only the specified portion of a whole image (live image) transmitted from the camera unit 102 and to perform encode processing thereon. The transmitting/receiving unit 106 receives a live image of the region A on which encode processing has been performed from the image processing unit 104 and transmits the live image to the client terminal 200 holding the control via the network 300.

The control unit 108 also performs processing to transmit information (control permission information) indicating that the control is assigned to the client terminal 200 that has transmitted the control request information. Accordingly, the control permission information is transmitted from the transmitting/receiving unit 106. When the control is assigned, the control unit 108 counts the elapsed time after the control being assigned based on time information from the timer 112. The control permission information contains the time (control assignment time) at which the control is assigned and information about the video (video 1) to which the control is assigned.

The control permission information is transmitted to the client terminal 200 via the network 300. When the control permission information is received, the transmitting/receiving unit 202 of the client terminal 200 transmits the control permission information to the display control unit 204. The display control unit 204 can cause the display unit 208 to display the remaining time in which the control can be held based on the control assignment time contained in the control permission information.

If the control over the video 1 over which the control is requested is already assigned, the control unit 108 transmits information indicating that the control is already assigned and the remaining time before the control is removed to the client terminal 200 that has transmitted the control request information. When such information is received through the transmitting/receiving unit 202, the client terminal 200 that has transmitted the control request information displays the information in the display unit 208 through processing of the display control unit 204. Therefore, the user can recognize the waiting time before the control is assigned to the client terminal 200 of the user.

The present embodiment has a configuration in which the control is assigned in the side of the camera terminal device 100. However, the present embodiment is not limited to this example. It is also possible for the client terminal 200 to assign the control by having a configuration similar to the one the camera terminal device 100 has.

According to the present embodiment, as described above, the control can be assigned to each of the client terminals 200 in a system capable of digitally performing operations such as panning, tilting, and zooming. Therefore, even if operation requests from the client terminals 200 are competed against, control can be permitted to each of the client terminals 200 according to the assigned control.

It should be understood by those skilled in the art that various modifications, combinations, sub-combinations and alterations may occur depending on design requirements and other factors insofar as they are within the scope of the appended claims or the equivalents thereof.
The present application contains subject matter related to that disclosed in Japanese Priority Patent Application JP 2010-108564 filed in the Japan Patent Office on May 10, 2010, the entire content of which is hereby incorporated by reference.

## Claims

1. A control device, comprising:
a receiving unit that receives request information of control to control a region specified in a whole image captured by a camera;
a control unit that assigns the control based on the request information when the control is not assigned to the region based on the request information; and
an image processing unit that acquires the region specified from the whole image based on control information to control the region when the control is assigned based on the request information,
wherein a plurality of the regions is set, and
the control unit assigns control to one of the regions when the control is not assigned to the one region, regardless whether or not control is assigned to other regions.

2. The control device according to claim 1, further comprising:
a timer to count an elapsed time after the control being assigned,
wherein when a predetermined time passes after the control being assigned, the control unit removes the control.

3. The control device according to claim 1 or 2, further comprising:
a transmitting unit that transmits a time at which control is assigned or an elapsed time after the control being assigned to a transmission source of the request information if the control is already assigned to the region.

4. A camera system in which a camera terminal device that captures an image and a client terminal device that controls the camera terminal device are connected via a network,
wherein the camera terminal device includes:
a receiving unit that receives request information of control to control a region specified in a whole image captured by a camera;
a control unit that assigns the control based on the request information when the control is not assigned to the region based on the request information; and
an image processing unit that acquires the region specified from the whole image based on control information to control the region when the control is assigned based on the request information,
wherein a plurality of the regions is set, and
the control unit assigns control to one of regions when the control is not assigned to the one region, regardless whether or not control is assigned to other regions.

5. The camera system according to claim 4, further comprising:
a timer to count an elapsed time after the control being assigned,
wherein when a predetermined time passes after the control being assigned, the control unit removes the control.

6. The camera system according to claim 4 or 5, further comprising:
a transmitting unit that transmits a time at which control is assigned or an elapsed time after the control being assigned to a transmission source of the request information if the control is already assigned to the region.

7. A program causing a computer to function as:
means for receiving request information of control to control a plurality of regions specified in a whole image captured by a camera;
means for assigning control based on the request information when the control is not assigned to the region based on the request information, and for assigning the control to one of the regions when the control is not assigned to the one region regardless whether or not control is assigned to other regions; and
means for acquiring the region specified from the whole image based on control information to control the region when the control is assigned based on the request information.
